# EUROPEAN PATENT SPECIFICATION

(11) **EP 1 523 657 B1**
(45) Date of publication and mention of the grant of the patent: **28.05.2008**
(21) Application number: 02764673.6
(22) Date of filing: 11.07.2002
(51) Int. Cl.: G01D 5/353

(54) **DELAYING INTERFEROMETER**
VERZÖGERUNGSINTERFEROMETER
INTERFEROMETRE RETARDATEUR

(43) Date of publication of application: 20.04.2005
(73) Proprietor: Agilent Technologies, Inc., Santa Clara, CA 95051 (US)
(72) Inventor: HAISCH, Hans-Joerg, 71155 Altdorf (DE)
(74) Representative: Barth, Daniel Mathias
(86) International application number: PCT/EP2002/007726
(87) International publication number: WO 2004/008078

(56) References cited:
- GB-A- 2 083 966
- ARAI K: "SENSITIVITY-ENHANCING SCHEME OF A POLARIMETRIC HETERODYNE SENSOR USING A BIREFRINGENT FIBER LOOP" OPTICS LETTERS, OPTICAL SOCIETY OF AMERICA, WASHINGTON, US, vol. 15, no. 19, 1 October 1990 (1990-10-01), pages 1103-1105, XP000147544 ISSN: 0146-9592
- BEHZAD MOSLEHI ET AL: "NOVEL AMPLIFIED FIBER-OPTIC RECIRCULATING DELAY LINE PROCESSOR" JOURNAL OF LIGHTWAVE TECHNOLOGY, IEEE. NEW YORK, US, vol. 10, no. 8, 1 August 1992 (1992-08-01), pages 1142-1147, XP000371909 ISSN: 0733-8724

## Description

### BACKGROUND OF THE INVENTION

The present invention relates to manipulating an optical signal, in particular to manipulating an optical signal in an optical interferometer, more particular to manipulating an optical signal in a swept wavelength interferometer having a measurement arm for a device under test (DUT) and a reference arm.

GB-A-2083966 discloses providing a modulation of ramp form to a frequency modulation radar, and performing a correction due to lack of linearity by using a reference signal generated by mixing the transmitted signal with a delayed transmitted signal.

The article "SENSITIVITY-ENHANCING SCHEME OF A POLARIMETRIC HETERODYNE SENSOR USING A BIREFRINGENT FIBER LOOP" OPTICS LETTERS, OPTICAL SOCIETY OF AMERICA, WASHINGTON, US, vol. 15, no. 19, 1 October 1990 (1990-10-01), pages 1103-1105, of K. Arai discloses of using a birefringent fiber loop for enhancing the sensitivity of a polarimetric heterodyne sensor.

The article: "NOVEL AMPLIFIED FIBER-OPTIC RECIRCULATING DELAY LINE PROCESSOR" JOURNAL OF LIGHTWAVE TECHNOLOGY, IEEE. NEW YORK, US, vol. 10, no. 8, 1 August 1992 (1992-08-01), pages 1142-1147, of Behzad Moslehi et al discloses an application of optical amplifiers in conjunction with a fiber-optic re-circulating delay.

### SUMMARY OF THE INVENTION

Therefore, it is an object of the invention to provide improved manipulation of an optical signal. The object is solved by the independent claims.

An advantage of an embodiment of the present invention is that the following problem of prior art interferometers can be avoided: A DUT in the measurement arm of an interferometer has a certain group delay. The reference arm has a certain group delay, also. However, the group delay of the DUT is normally bigger than that of the reference arm. Therefore, when sweeping the frequency of a tunable laser source (TLS), which is feeding the interferometer with a laser beam, a signal with a certain frequency having traveled through the measurement arm is arriving later at the detector than the signal of the reference arm with that frequency. Consequently, the signal of the DUT interferes with a reference signal having a different frequency not being the reference frequency belonging to the detected DUT signal.

In an embodiment of the present invention, by introducing a delay line, preferably by introducing a loop, in the reference arm of the interferometer it is possible to achieve two targets at the same time: First, it is created a wavelength reference unit (WRU) for the TLS and, second, it is generated a periodic delay line in the reference arm that allows to match the delay of the reference arm to a delay in the measurement arm caused by the DUT. The first is possible because the beat signal frequency of the interference signal between the delayed part and the non-delayed part of the signal is determined by the frequency sweep rate of the TLS. Therefore, the beat signal frequency is a direct measure of the tuning speed of the TLS. The present application seeks independent protection for this aspect, also.

Furthermore, when combining the signals of the DUT arm and of the reference arm the beat signal frequency of the interference signal is determined by the frequency sweep rate of the TLS and by the group delay difference between the DUT and the reference arm. This means that at the end of the interferometer a detector can detect two beat frequencies, which however can be separately processed to evaluate a wavelength reference and a measurement result. Advantageously, only one detector for both beat frequencies is necessary.

Especially when analyzing DUTs with big group delays the afore mentioned situation becomes a serious problem since the beat signal frequency might become larger than the interferometer detection bandwidth.

Due to the delay line or loop integrated in the reference arm of the inventive interferometer there is introduced a delay in at least a part of the reference signal. Then at least a part of the delayed part is delayed again and so on. This provides for every possible delay of the DUT a suiting delayed signal in the preference signal. This means, also for a certain limited bandwidth of a photo diode used as a part of a detector measuring the interference signal it will nearly always be possible to detect a beat frequency. Therefore, no variable time delay compensation is necessary.

Possible application fields of embodiments of the present invention are measurement setups for loss and phase characterization of long devices or DUTs having large group delay.

Another advantage of an embodiment of the present invention is that the delay line or integrated WRU also can be used to compensate for nonlinearities in the sweeping velocity of the TLS. The present application seeks independent protection for this aspect, also.

Additionally, embodiments of the present invention can reduce the impact of the laser phase noise on the measurement.

Moreover, embodiments of the present invention can reduce laser phase noise induced de-correlation of the signals in an interferometer.

In a preferred embodiment of the invention the delay line comprises at least one beam splitter or coupler connected to a loop providing the delay. The percentage of the beam coupled out by the coupler can be determined individually, i.e. any percentage can be used for the present invention, e.g. 95:5, 90:10, 80:20, 70:30, 50:50, 30:70, 20:80, 10:90, 5:95 etc.

In another preferred embodiment of the invention the delay line, preferably comprising a loop, is connected by two beam splitters or couplers with the line providing the signal, one coupler for coupling in the signal and one coupler for coupling out the signal. This allows optimizing independently the amount of power that is coupled into the delay line and out of the delay line.

In another preferred embodiment of the invention the inventive delay line is used to provide comb like frequency lines in a certain frequency range.

A further advantage of embodiments of the present invention is a reduced setup group delay impact on measurement results.

Other preferred embodiments are shown by the dependent claims.

It is clear that the invention can be partly embodied or supported by one or more suitable software programs, which can be stored on or otherwise provided by any kind of data carrier, and which might be executed in or by any suitable data processing unit.

### BRIEF DESCRIPTION OF THE DRAWINGS

Other objects and many of the attendant advantages of the present invention will be readily appreciated and become better understood by reference to the following detailed description when considering in connection with the accompanied drawings. The components in the drawings are not necessarily to scale, emphasis instead being placed upon clearly illustrating the principle of the present invention. Features that are substantially or functionally equal or similar will be referred to with the same reference sign(s).
- Fig. 1: shows a schematic illustration of a fiber delay line WRU according to an embodiment of the present invention;
- Fig. 2: shows a schematic illustration of an integrated delay line interferometer according to an embodiment of the present invention;
- Fig. 3: shows a schematic illustration of an integrated delay line interferometer according to an embodiment of the present invention; and
- Fig. 4: shows a schematic illustration of a fiber delay line WRU using split coupling for improved power distribution according to an embodiment of the present invention.

### DETAILED DESCRIPTION OF THE INVENTION

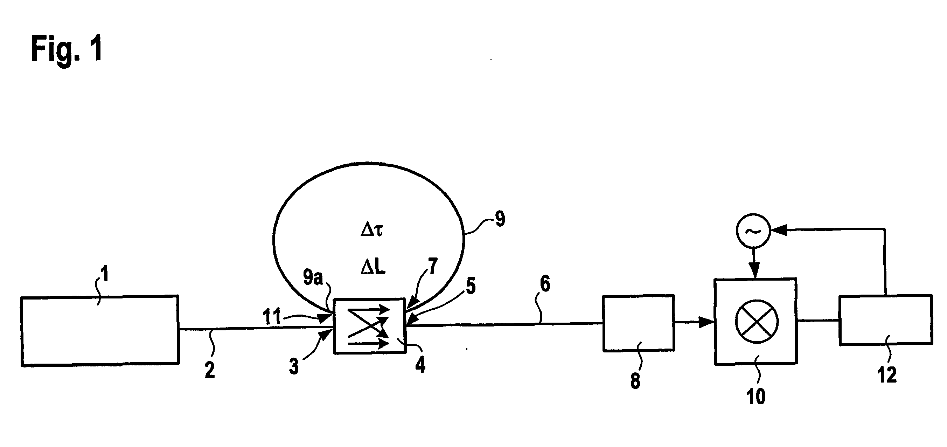

Referring now in greater detail to the drawings, Fig. 1 shows a schematic illustration of a fiber delay line WRU according to an embodiment of the present invention. A TLS 1 provides a laser beam to a fiber 2. The fiber 2 is connected to a first port 3 of a fiber coupler 4. Connected to a second port 5 of the fiber coupler 4 is another fiber 6 connected to a detector 8 comprising a not shown photo diode. Connected to the detector is a mixer 10 that is connected to a WRU processing unit 12.

The fiber coupler 4 provides 50 % of the incoming power at port 3 to outgoing port 5 and 50% to another outgoing port 7 as indicated by arrows in the box of fiber coupler 4 in Fig. 1. Port 7 is connected to a fiber delay line 9 with a length of ΔL providing a delay of Δτ as indicated by respective symbols in Fig. 1. An end 9a of a delay line 9 in form of a loop is connected to a second ingoing port 11 of the fiber coupler 4. The power received by port 11 is divided at a ratio of 50:50 to the outgoing ports 5 and 7 as indicated by arrows in the box of fiber coupler 4 in Fig. 1.

The inventive method works as follows: When continuously tuning the TLS 1 it is generated a light wave with increasing optical frequency in fiber 2. 50 % of this signal is coupled into delay line 9 and 50% travels undelayed into fibers 6. Since the delayed signal is coupled into fiber 6 by coupler 4, also, detector 8 detects two signals having different optical frequencies f1 and f2. The frequency difference between f1 and f2 is determined by the product of the tuning rate γ of the TLS 1 and the signal delay. These signals interfere at detector 8 and generate a beat signal of frequency f1-f2, thus the frequency of which is a direct measure of the tuning rate of the TLS 1. Since part of the delayed signal is again coupled into the delay line 9 the delay can be written as follows: n*Δτ, n being the number of circulations of the signal in the delay line 9.

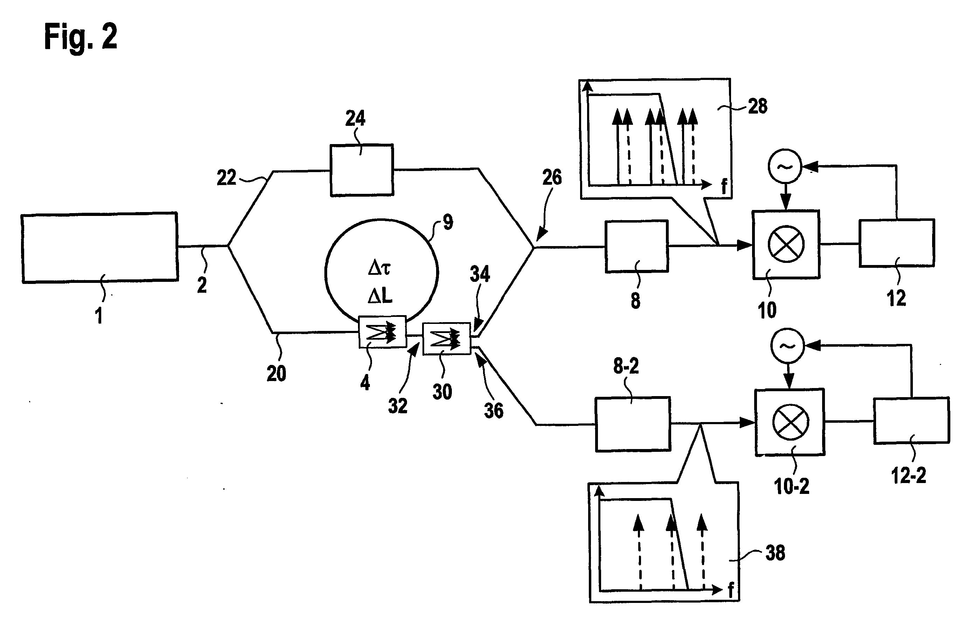

Fig. 2 shows a schematic illustration of an integrated delay line interferometer according to an embodiment of the present invention. The interferometer comprises a reference arm 20 and a measurement arm 22. In the reference arm 20 a delay line 9 according to Fig. 1 is coupled in by a coupler 4. In the measurement arm 22 a DUT 24 is connected. Reference arm 20 and measurement arm 22 are superimposed by a not shown beam splitter at 26. The signals of the reference arm 20 and the measurement arm 22 interfere at 26 and are detected by a detector 8. The resulting beat frequencies as indicated by a schematic graph 28 are provided to a mixer 10 and a DUT processing unit 12.

Additionally to coupler 4 another coupler 30 is coupled into the reference arm 20 after the coupler 4. Coupler 30 has an incoming port 32 and two outgoing ports 34 and 36. Outgoing port 34 is connected to the recombining beam splitter at 26 whereas outgoing port 36 is connected to a second detector 8-2 which is connected to a second mixer 10-2 that is connected to a WRU processing unit 12-2. Detector 8-2 detects beat. Second detector 8-2 detects the WRU information whereas detector 8 detects both WRU and DUT information. With the help of detector 8-2 it is possible to evaluate the WRU information unambiguously.

Due to the delay line 9 the interferometer beat frequencies are nearly independent of a length of the DUT 24. E.g. without the delay line 9 and if the sweeping velocity would be approximately 40nm/s and the length of the DUT 24 would be up to 100m the beat frequency of the interferometer would oscillate between 0 and approximately 2,5 MHz. However, if a delay line 9 is introduced with a length of approximately 10m the beat frequency of the interferometer would oscillate between 0 and approximately 0,250 MHz, only.

Detector 8 and detector 8-2 both detect beat signals N*Δτ*γ as auto beat signals with frequencies as illustrated in schematic graph 38 and detector 8 detects signals (τ1-τ2-N*Δτ)*γ with frequencies as illustrated in schematic graph 28 as a measurement beat signal. Within the detector bandwidth of detector 8 as indicated by the solid line in schematic graph 28 it is possible to select one or two auto beat signals as indicated by arrows in the schematic graph 28 by means of the processing units 12 and 12-2.

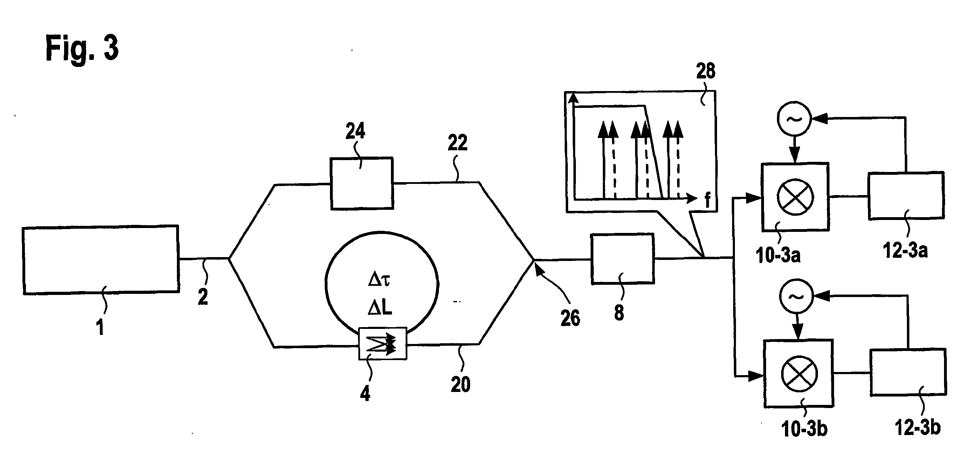

Fig. 3 shows a schematic illustration of an integrated delay line interferometer according to an embodiment of the present invention. The difference of the embodiment of Fig. 3 to the embodiment of Fig. 2 is that there is no additional coupler 30 provided in the reference arm 20 of the interferometer. However, detector 8 is connected to two mixers 10-3a and 10-3b that are each connected to a processing unit 12-3a and 12-3b. Processing unit 12-3a is a WRU processing unit according to the WRU processing unit 12-2 of the embodiment of Fig. 2 whereas the processing 12-3b is a DUT processing unit according to the DUT processing unit 12 of the embodiment of Fig. 2.

Detector 8 detects beat signals N*Δτ*γ as an auto beat signal and detects (τ1-τ2-N*Δτ)*γ as a measurement beat signal. Within the detector bandwidth of detector 8 as indicated by the solid line in schematic graph 28 it is possible to select one or two auto beat signals as indicated by arrows in the schematic graph 28 by means of the processing units 12-3a and 12-3b.

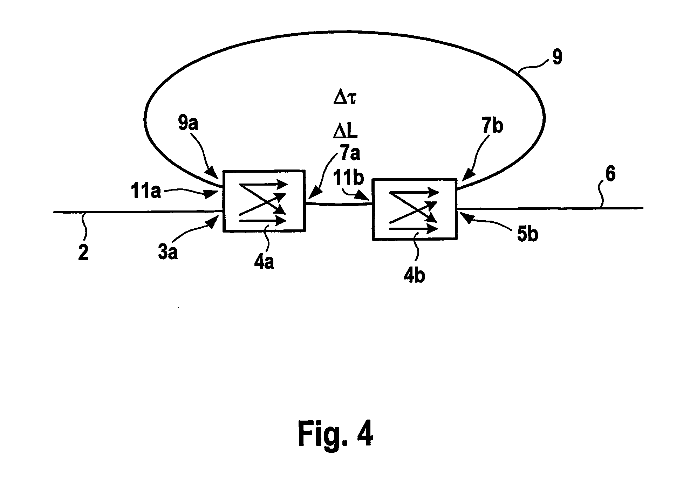

Fig. 4 shows a schematic illustration of a fiber delay line WRU using split coupling for improved power distribution between the power coupled back into the delay line 9 and from the delay line to fiber 6 according to an embodiment of the present invention. This embodiment can be used in all above described embodiment of Fig. 1-3. According to the embodiment of Fig. 4 coupler 4 is split into two couplers 4a and 4b. Only port 7a of first coupler 4a is connected to an incoming port 11 b of second coupler 4b. Outgoing ports 5b and 7b of second coupler 4b have the same function as outgoing ports 5 and 7 of coupler 4 in Fig. 1, i.e. outgoing port 7b is connected to the fiber delay line 9 which is connected with its end 9a to incoming port 11a of first coupler 4a. Incoming port 3a of coupler 4a is connected to fiber 2 and outgoing port 5b of second coupler 4b is connected to fiber 6.

## Claims

1. A method of manipulating an optical reference signal, comprising the steps of:
a) splitting the reference signal into a first signal and a second signal,
b) delaying the first signal with respect to the second signal,
c) splitting the delayed first signal into a first and a second part,
d) coupling the second part to the second signal, and
e) repeating steps a)- d) with the first part of the first delayed signal instead of the reference signal,
**characterized by**
detecting a first beat signal of a first superimposed signal (6, 36) resulting from the coupling of step d), and detecting beat.

2. The method of claim 1, further comprising the steps of:
- delaying the first signal by letting the first signal travel a different path (9) than the second signal.

3. The method of the claims 1 or 2, further comprising the steps of:
- the ratio of the first and the second part ranging between 5:95 and 50:50.

4. The method of any one of the claims 1 - 3, further comprising the steps of:
- performing all splitting operations at the same splitting point (4, 4a, 4b).

5. The method of claim 1, further comprising:
- splitting an initial light signal into a measurement signal (22) and the reference signal (20),
- coupling the measurement signal (22) into an optical device undertest (24),
- superimposing the first superimposed signal (36) and a signal from the optical device under test to provide a second superimposed light signal (26),
- detecting the power of the second superimposed signal (26) as a function of frequency when tuning the frequency of the optical signal from a minimum to a maximum of a given frequency range, and deriving a second beat signal therefrom, and
- deriving optical properties of the device under test (24) from the second beat signal and the first beat signal.

6. A computer program or computer program product, preferably stored on a data carrier, encoding the method steps of one of the claims 1 to 4 for execution in an apparatus according to one of the claims 7 to 9.

7. An apparatus for manipulating an optical signal, comprising:
a first coupler (4, 4a, 4b) having a first input port (3) a second input port (11), a first output port (5) and a second output port (7), adapted to split light received at each of the input ports (3, 11) to each of the output ports (5, 7), wherein the first input port is adapted for receiving a reference signal,
a delaying device (9) coupled between the second input port (11) and the second output port (7),
**characterized by**
a first detector (8, 8-2) coupled to the first output port (5) adapted for detecting a beat signal of a first superimposed signal (6, 36) provided by the first output port (5), and detecting beat.

8. The apparatus of claim 7,
wherein the first coupler (4a, 4b) comprises a second coupler (4a) comprising the first input port (3) the second input port (11), and a third coupler (4b) comprising a first output port (5) and a second output port (7), wherein an output (7a) of the second coupler (4a) is coupled to an input port (11 b) of the third coupler (4b).

9. The apparatus of claim 7, comprising
a forth coupler for splitting an initial light signal into a measurement signal (22) and the reference signal (20),
a connecting device for coupling the measurement signal (22) into an optical device under test (24),
a fifth coupler (26) coupled between the optical device under test (24) and the first detector (8, 8-2) for superimposing the first superimposed signal and a signal from the optical device under test to provide a second superimposed light signal (26),
a second detector (8, 8-2) for detecting the power of the second superimposed signal (26) as a function of frequency when tuning the frequency of the optical signal from a minimum to a maximum of a given frequency range, and deriving a second beat signal therefrom, and
a processing unit (12, 12-2, 12-3a, 12-3b) for deriving optical properties of the device under test (24) from the second beat signal and the first beat signal.

## Patentansprüche

1. Verfahren zum Bearbeiten eines optischen Referenzsignals, wobei das Verfahren die folgenden Schritte aufweist:
a) Aufspalten des Referenzsignals in ein erstes und ein zweites Signal,
b) Verzögern des ersten Signals gegenüber dem zweiten Signal,
c) Aufspalten des verzögerten ersten Signals in einen ersten und einen zweiten Teil,
d) Verknüpfen des zweiten Teils mit dem zweiten Signal, und
e) Wiederholen der Schritte a) bis d) mit dem ersten Teil des ersten verzögerten Signals anstelle des Referenzsignals,
**gekennzeichnet durch**
Erkennen eines ersten Schwebungssignals eines ersten überlagerten Signals (6, 36), das sich aus dem Verknüpfen in Schritt d) ergibt, und Erkennen der Schwebung.

2. Verfahren nach Anspruch 1, das ferner den folgenden Schritt aufweist:
- Verzögern des ersten Signals, indem das erste Signal über einen anderen Strahlengang (9) geleitet wird als das zweite Signal.

3. Verfahren nach Anspruch 1 oder 2, das ferner den folgenden Schritt aufweist:
- das Verhältnis zwischen dem ersten und dem zweiten Teil liegt im Bereich zwischen 5:95 und 50:50.

4. Verfahren nach einem der Ansprüche 1 bis 3, das ferner den folgenden Schritt aufweist:
- Durchführen alle Aufspaltungsoperationen am selben Aufspaltungspunkt (4, 4a, 4b).

5. Verfahren nach Anspruch 1, das ferner folgende Schritte aufweist:
- Aufspalten eines Ursprungslichtsignals in ein Messsignal (22) und das Referenzsignal (20),
- Einkoppeln des Messsignals (22) in eine zu testende optische Einheit (24),
- Überlagern des ersten überlagerten Signals (36) mit einem Signal aus der zu testenden optischen Einheit, um ein zweites überlagertes Lichtsignal (26) zu erzeugen,
- Nachweisen der Intensität des zweiten überlagerten Signals (26) als Funktion der Frequenz, wenn die Frequenz des optischen Signals einen vorgegebenen Frequenzbereich von einem Mindestwert bis zu einem Höchstwert durchläuft, und Ableiten eines zweiten Schwebungssignals aus der Intensität, und
- Ableiten der optischen Eigenschaften der zu testenden Einheit (24) aus dem zweiten und dem ersten Schwebungssignal.

6. Computerprogramm oder Computerprogrammprodukt, das vorzugsweise auf einem Datenträger gespeichert ist und die Verfahrensschritte nach einem der Ansprüche 1 bis 4 codiert, um das Verfahren in einer Vorrichtung nach einem der Ansprüche 7 bis 9 durchzuführen.

7. Vorrichtung zum Bearbeiten eines optischen Signals, wobei die Vorrichtung Folgendes aufweist:
einen ersten Koppler (4, 4a, 4b) mit einem ersten Eingangsanschluss (3), einem zweiten Eingangsanschluss (11), einem ersten Ausgangsanschluss (5) und einem zweiten Ausgangsanschluss (7), der zum Aufspalten des an jedem der Eingangsanschlüsse (3, 11) empfangenen Lichts auf jeden der Ausgangsanschlüsse (5, 7) dient, wobei der erste Eingangsanschluss zum Empfangen eines Referenzsignals dient,
eine zwischen den zweiten Eingangsanschluss (11) und den zweiten Ausgangsanschluss (7) geschaltete Verzögerungseinheit (9),
**gekennzeichnet durch**
einen mit dem ersten Ausgangsanschluss (5) verbundenen ersten Detektor (8, 8-2) zum Erkennen eines Schwebungssignals eines vom ersten Ausgangsanschluss (5) gelieferten ersten überlagerten Signals (6, 36) und zum Erkennen der Schwebung.

8. Vorrichtung nach Anspruch 7,
bei der der erste Koppler (4a, 4b) einen zweiten Koppler (4a), welcher den ersten Eingangsanschluss (3) und den zweiten Eingangsanschluss (11) aufweist, und einen dritten Koppler (4b) aufweist, welcher einen ersten Ausgangsanschluss (5) und einen zweiten Ausgangsanschluss (7) aufweist, wobei ein Ausgang (7a) des zweiten Kopplers (4a) mit einem Eingangsanschluss (11 b) des dritten Kopplers (4b) verbunden ist.

9. Vorrichtung nach Anspruch 7, die Folgendes aufweist:
einen vierten Koppler zum Aufspalten eines Ursprungslichtsignals in ein Messsignal (22) und das Referenzsignal (20),
eine Verbindungseinheit zum Einkoppeln des Messsignals (22) in eine zu testende Einheit (24),
einen zwischen die zu testende optische Einheit (24) und den ersten Detektor (8, 8-2) geschalteten fünften Koppler (26) zum Überlagern des ersten überlagerten Signals mit einem Signal aus der zu testenden optischen Einheit, um ein zweites überlagertes Lichtsignal (26) zu erzeugen,
einen zweiten Detektor (8, 8-2) zum Nachweisen der Intensität des zweiten überlagerten Signals (26) als Funktion der Frequenz, wenn die Frequenz des optischen Signals einen vorgegebenen Frequenzbereich von einem Mindestwert bis zu einem Höchstwert durchläuft, und zum Ableiten eines zweiten Schwebungssignals aus der Intensität, und
eine Verarbeitungseinheit (12, 12-2, 12-3a, 12-3b) zum Ableiten der optischen Eigenschaften der zu testenden Einheit (24) aus dem zweiten und dem ersten Schwebungssignal.

## Revendications

1. Procédé de manipulation d'un signal de référence optique, comprenant les étapes suivantes :
a) la séparation du signal de référence en un premier signal et un deuxième signal ;
b) le retardement du premier signal par rapport au deuxième signal ;
c) la séparation du premier signal retardé en une première partie et une deuxième partie ;
d) le couplage de la deuxième partie au deuxième signal, et
e) la répétition des étapes a) à d) avec la première partie du premier signal retardé à la place du signal de référence ;
**caractérisé par**
la détection d'un premier signal de battement d'un premier signal superposé (6, 36) résultant du couplage de l'étape d), et la détection du battement.

2. Procédé suivant la revendication 1, comprenant en outre l'étape suivante :
- le retardement du premier signal en laissant le premier signal parcourir un trajet différent (9) de celui du deuxième signal.

3. Procédé suivant la revendication 1 ou 2, comprenant en outre l'étape suivante :
- le rapport entre la première partie et la deuxième partie étant compris entre 5:95 et 50:50.

4. Procédé suivant l'une quelconque des revendications 1 à 3, comprenant en outre l'étape suivante :
- l'exécution de toutes les opérations de séparation au même point de séparation (4, 4a, 4b).

5. Procédé suivant la revendication 1, comprenant en outre les étapes suivantes :
- la séparation d'un signal lumineux initial en un signal de mesure (22) et le signal de référence (20) ;
- le couplage du signal de mesure (22) dans un dispositif optique sous mesures (24) ;
- la superposition du premier signal superposé (36) et d'un signal venant du dispositif optique sous mesures pour fournir un deuxième signal lumineux superposé (26) ;
- la détection de la puissance du deuxième signal superposé (26) en fonction de la fréquence lors de l'accord de la fréquence du signal optique d'un minimum à un maximum d'une gamme de fréquences donnée, et la dérivation d'un deuxième signal de battement de celui-ci, et
- la dérivation des propriétés optiques du dispositif sous mesures (24) du deuxième signal de battement et du premier signal de battement.

6. Programme informatique ou produit formant programme informatique, de préférence stocké sur un support de données, codant les étapes du procédé suivant l'une quelconque des revendications 1 à 4 en vue de leur exécution dans un appareil suivant l'une quelconque des revendications 7 à 9.

7. Appareil pour manipuler un signal optique, comprenant :
un premier coupleur (4, 4a, 4b) comportant un premier port d'entrée (3), un deuxième port d'entrée (11), un premier port de sortie (5) et un deuxième port de sortie (7), à même de séparer la lumière reçue au niveau de chacun des ports d'entrée (3, 11) vers chacun des ports de sortie (5, 7), dans lequel le premier port d'entrée est à même de recevoir un signal de référence ;
un dispositif de retardement (9) couplé entre le deuxième port d'entrée (11) et le deuxième port de sortie (7) ;
**caractérisé par**
un premier détecteur (8, 8-2) couplé au premier port de sortie (5) à même de détecter un signal de battement d'un premier signal superposé (6, 36) fourni par le premier port de sortie (5), et de détecter un battement.

8. Appareil suivant la revendication 7,
dans lequel le premier coupleur (4a, 4b) comprend un deuxième coupleur (4a) comprenant le premier port d'entrée (3), le deuxième port d'entrée (11) et un troisième coupleur (4b) comprenant un premier port de sortie (5) et un deuxième port de sortie (7), dans lequel une sortie (7a) du deuxième coupleur (4a) est couplée à un port d'entrée (11 b) du troisième coupleur (4b).

9. Appareil suivant la revendication 7, comprenant :
un quatrième coupleur pour séparer un signal lumineux initial en un signal de mesure (22) et le signal de référence (20) ;
un dispositif de connexion pour coupler le signal de mesure (22) dans un dispositif optique sous mesures (24) ;
un cinquième coupleur (26) couplé entre le dispositif optique sous mesures (24) et le premier détecteur (8, 8-2) pour superposer le premier signal superposé et un signal venant du dispositif optique sous mesures pour fournir un deuxième signal lumineux superposé (26) ;
un deuxième détecteur (8, 8-2) pour détecter la puissance du deuxième signal superposé (26) en fonction de la fréquence lors de l'accord de la fréquence du signal optique d'un minimum à un maximum d'une gamme de fréquences donnée, et en dériver un deuxième signal de battement, et
une unité de traitement (12, 12-2, 12-3a, 12-3b) pour dériver des propriétés optiques du dispositif sous mesures (24) du deuxième signal de battement et du premier signal de battement.
